# EUROPÄISCHE PATENTSCHRIFT

(11) **EP 0 959 095 B1**
(45) Veröffentlichungstag und Bekanntmachung des Hinweises auf die Patenterteilung: **04.09.2002**
(21) Anmeldenummer: 99109741.1
(22) Anmeldetag: 18.05.1999
(51) Int. Cl.: C08G 77/18, C08G 77/08

(54) **Verfahren zur Herstellung von Poly(diorganosiloxanen) mit Diorganyloxyorganylsilyl- oder Triorganylsilyl-Endgruppen**
Process for preparing polydiorganosiloxanes containing diorganyloxyorganosilyl or triorganylsilyl end-groups
Procédé de préparation de polydiorganosiloxanes , ayant des groupes terminaux diorganyloxyorganylsilyles ou triorganylsilyles

(30) Priorität: 20.05.1998 DE 19822679
(43) Veröffentlichungstag der Anmeldung: 24.11.1999
(73) Patentinhaber: GE Bayer Silicones GmbH & Co. KG, 40699 Erkrath (DE)
(72) Erfinder: Eckhardt, Alexander Dr., 51065 Köln (DE); Sockel, Karl-Heinz, 51373 Leverkusen (DE); Weber, Wilhelm Dr., 51373 Leverkusen (DE)

(56) Entgegenhaltungen:
- DE-A- 19 533 915

## Beschreibung

Die vorliegende Erfindung betrifft ein Verfahren zur Herstellung von Poly(diorganosiloxanen) mit Diorganyloxyorganylsilyl- oder Triorganyloxysilyl-Endgruppen durch Umsetzung von α,ω-Dihydroxy-poly(diorganosiloxanen) mit dem Vernetzungsprodukt aus mindestens einem Alkoxysilan und Phosphor(V)oxid.

Es sind bereits mehrere Verfahren zur Herstellung der erfindungsgemäßen Polymere bzw. solche Polymere enthaltende Formulierungen beschrieben worden. Diese Polymere werden u. a. zur Herstellung von 1-Komponenten Siliconpasten eingesetzt, im folgenden RTV-1 (Raumtemperatur vulkanisierende 1 Komponenten) Alkoxysysteme genannt, die unter Ausschluß von Feuchtigkeit lagerfähig sind und unter Zutritt von Luftfeuchtigkeit unter Abspaltung von Alkoholen zu Elastomeren aushärten.

Aus US-A 47 27 127 und DE-A 19 533 915 ist dabei die Umsetzung von α,ω-Dihydroxy-poly(diorganosiloxanen) mit Alkoxysilanen in Gegenwart von Phosphorsäureestern bekannt.

Insbesondere die Monoalkylphosphorsäureester sind jedoch nur aufwendig herstellbar, was das Verfahren zu teuer macht.

Aufgabe der vorliegenden Erfindung war es daher, ein Verfahren zur Umsetzung von α,ω-Dihydroxy-poly(diorganosiloxanen) mit Alkoxysilanen bereitzustellen, bei dem ein kostengünstiger und einfach herzustellender Katalysator für die Herstellung von Poly(diorganosiloxanen) mit Diorganyloxy-organylsilyl- oder Triorganyloxysilyl-Endgruppen eingesetzt werden kann.

Überraschenderweise wurde nun gefunden, daß die Umsetzung von α,ω-Dihydroxypoly(diorganosiloxanen) mit dem Umsetzungsprodukt aus einem Alkoxysilan und Phosphor(V)oxid bereits bei Raumtemperatur innerhalb weniger Minuten zu Alkoxyendgestoppten Poly(diorganosiloxanen) führt.

Nach Ablauf der gewünschten Reaktion können die erfindungsgemäßen Phosphorsäureester durch Zugabe geeigneter Verbindungen desaktiviert werden. Dies ist jedoch im Gegensatz zu den im Stand der Technik bekannten Verfahren in Fällen notwendig, in denen es infolge einer Einwirkung der erfindungsgemäßen Umsetzungsprodukte zu produktschädigenden Umlagerungen kommt.

Gegenstand der vorliegenden Erfindung ist daher ein Verfahren zur Herstellung von Poly(diorganosiloxanen) mit Diorganyloxy-organylsilyl- oder Triorganyloxysilyl-Endgruppen durch Umsetzung von α,ω-Dihydroxy-poly(diorganosiloxanen) mit dem Umsetzungsprodukt aus mindestens einem Alkoxysilan und Phosphor(V)oxid.

Für das erfindungsgemäße Verfahren sind alle bekannten α,ω-Dihydroxy-poly-(diorganosiloxane) geeignet, wobei die Organylreste C₁-C₁₈-Alkylreste, bevorzugt Methylreste sind. Die Methylreste können teilweise durch Vinyl-, Phenyl-, C₂-C₈-Alkyl- oder Halogenalkylgruppen ersetzt sein. Die Poly(diorganosiloxane) sind im wesentlichen linear, können jedoch auch Anteile an verzweigend wirkenden Organosiloxyeinheiten enthalten. Zudem kann das Poly(diorganosiloxan) partiell durch unreaktive Reste, wie beispielsweise Trimethylsiloxyreste, substituiert sein. In einer bevorzugten Ausführungsform der vorliegenden Erfindung besitzen die α,ω-Dihydroxypoly(diorganosiloxane) eine Viskosität zwischen 0,1 und 1000 Pas, vorzugsweise zwischen 10 und 500 Pas, bestimmt bei 20°C nach DIN 53 019.

Als Alkoxysilan wird im Sinne der Erfindung ein Alkoxysilan oder ein Gemisch aus mehreren Alkoxysilanen der Formel (I)

R² ₙSi(OR¹)₄₋ₙ (I)

eingesetzt, worin
- R¹: einen gegebenenfalls substituierten C₁-C₆-Alkyl-, C₂-C₈-Alkoxyalkyl- oder C₅-C₇-cycloaliphatischen Kohlenwasserstoffrest,
- R²: einen gegebenenfalls substituierten C₁-C₁₀-Alkyl-, C₂-C₁₀-Alkenyl-, Phenyl- oder substituierte Phenylreste,
- n: 0, 1, oder 2 bedeutet.

Besonders bevorzugt sind als Alkoxysilan Tetramethoxysilan, Methyltrimethoxysilan, Methyltriethoxysilan, Vinyltriethoxysilan, Vinyltriisopropoxysilan, Tetraethoxysilan und/oder Vinyltrimethoxysilan.

Geeignet sind ebenfalls an der Alkylgruppe substituierte Alkoxysilane, wie z.B.

X-CH₂-CH₂-CH₂-Si(OR¹)₃ (II)

mit
- X =: HS-, Cl- und anderen Subsdtuenten.

Es können auch teilhydrolisierte Alkoxysilane in dem erfindungsgemäßen Verfahren eingesetzt werden.

Vorzugsweise werden α,ω-Dihydroxypolydiorganosiloxan und Alkoxysilan mit mindestens molarem Verhältnis, bezogen auf den SiOH-Gehalt, eingesetzt.

Das Umsetzungsprodukt von Phosphor(V)oxid mit dem Alkoxysilan der Formel (I) entsteht vorzugsweise durch die Umsetzung bei Temperaturen zwischen 20 und 150°C, gegebenenfalls in einem inerten organischen Lösemittel, wie z.B. Hexan, Toluol etc.

Eventuell vorhandenes Lösemittel kann nach Beendigung der Reaktion abgezogen werden.

Vorzugsweise beträgt das molare Verhältnis von Phosphor zum Silicium des Alkoxysilans mindestens 2:3.

Die Gesamtmenge an Umsetzungsprodukt aus Alkoxysilan und Phosphor(V)oxid beträgt, bezogen auf die α-ω-Dihydroxypoly(diorganosiloxan) vorzugsweise 0,1 bis 10 Gew.-%, besonders bevorzugt 1 bis 4 Gew.-%.

In einer Ausführungsform der vorliegenden Erfindung werden die Umsetzungsprodukte aus Phosphor(V)oxid mit Alkoxysilanen nach der Herstellung der Alkoxy-endgestoppten Polymere durch geeignete Verbindungen desaktiviert, um einen unerwünschten Abbau der Polymere zu vermeiden.

Die Desaktivierung kann mittels Neutralisation mit Basen wie z.B. NEt₃, Komplexbildung oder sonstiger Reaktion erfolgen.

Das erfindungsgemäße Verfahren wird in Abhängigkeit von dem gewünschten Grad der Endstoppung und der Reaktivität des verwendeten Alkoxysilans, vorzugsweise bei Temperaturen zwischen 0 und 100°C, bevorzugt 15 bis 60°C, besonders bevorzugt 18 bis 40°C, ganz besonders bevorzugt bei Raumtemperatur, durchgeführt. Die Reaktionszeit beträgt dabei mindestens eine Minute, vorzugsweise 5 bis 30 Minuten.

Vorzugsweise wird bei dem Verfahren das α,ω-Dihydroxy-poly(diorganosiloxan) vorgelegt und mit gegebenenfalls weiterem Alkoxysilan, das mit dem mit Phosphat(V)oxid umgesetzten Alkoxysilan gleich oder verschieden sein kann, und das Umsetzungsprodukt nachdosiert. Die Menge an weiterem Alkoxysilan beträgt vorzugsweise 0-8 Gew.-%.

Eventuell auftretende Gelphasen können durch Zusatz eines Alkohols vorzugsweise Methanol oder Ethanol reduziert werden.

Im Rahmen der vorliegenden Erfindung können zudem vernetzbare Mischungen hergestellt werden, enthaltend Poly(diorganosiloxane) mit Diorganyloxyorganylsilyl- oder Triorganylsilyl-Endgruppen, die nach dem erfindungsgemäßen Verfahren hergestellt und desaktiviert wurden, sowie Vernetzungskatalysatoren und gegebenenfalls Füllstoffe, Weichmacher oder sonstige Zusatzstoffe.

Füllstoffe im Sinne der Erfindung sind beispielsweise verstärkende Füllstoffe, wie z.B. pyrogene Kieselsäure und Ruß, semiverstärkende Füllstoffe, wie z.B. gefällte Kreide und gefällte Kieselsäure, nichtverstärkende Füllstoffe, wie z.B. gemahlene Naturkreide, Quarzmehl, wasserunlösliche Metall-Silicate, Carbonate, Oxide und Sulfate, wobei die eingesetzten Füllstoffe auch oberflächemodifiziert sein können. Diese können z.B. in Mengen von 0 bis 80 Gew.-%, bezogen auf die Gesamtmischung, eingesetzt werden.

Weichmacher im Sinne der Erfindung sind z.B. Polydimethylsiloxane mit Trimethylsiloxyendgruppen und einer Viskosität von 0,1 bis 5 Pas. Diese werden vorzugsweise in Mengen von 0 bis 50 Gew.-%, bezogen auf die Gesamtmischung, zugesetzt.

Vernetzungskatalysatoren im Sinne der Erfindung sind alle nach dem Stand der Technik in kondensationsvernetzenden Polysiloxanmassen gebräuchlichen Katalysatoren geeignet. Besonders bevorzugt sind organische Titan- und Zinnverbindungen. Besonders bevorzugte Zinnverbindungen sind z.B. Diorganozinndicarboxylate, wie Dibutylzinnlaurat und Dioctylzinnmeleat sowie Lösungen von Diorganozinnoxiden in Kieselsäureestern. Bevorzugte Titanverbindungen sind beispielsweise Alkyltitanate, wie Tetraisopropyltitanat, Tetrabutyltitanat und chelatisierte Titanverbindungen, wie Diisobutyl-bisacetessigsäureethylester-titanat. Die Mengen an Titanverbindung betragen vorzugsweise 0 bis 5 Gew.-%, der Anteil an Sn-Verbindung vorzugsweise 0 bis 2 Gew.-%, besonders bevorzugt 0,1 Gew.-%, bezogen auf die Gesamtmischung.

Weitere Additive im Sinne der Erfindung sind z.B. Haftmittel, Pigmente und Fungizide. Als Haftmittel bevorzugt sind organofunktionelle Silane der Formeln: 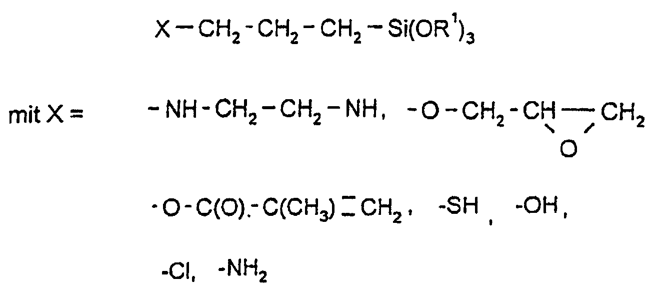 wobei
- R¹: die zuvor genannte Bedeutung hat..

Die Menge an Haftmittel beträgt vorzugsweise 0 bis 10 Gew.-%, bezogen auf die Gesamtmischung.

Zur Herstellung der vernetzbaren Mischungen werden die Poly(diorganosiloxane) mit Diorganyloxyorganylsilyl- oder Triorganylsilyl-Endgruppen mit den zusätzlich benötigten Komponenten homogen vermischt.

Die Herstellung der RTV-1 Massen kann in allen nach dem Stand der Technik gebräuchlichen Mischaggregaten erfolgen wie z.B. Planetenmischer, Dissolvern, Butterfly-Mischern oder kontinuierlich arbeitenden Mischschnecken.

Die folgenden Beispiele dienen der Erläuterung der Erfindung ohne jedoch begrenzend zu wirken.

### Beispiele

### Herstellung Alkoxy-endgestoppter Poly(diorganosiloxane)

Zur Überprüfung der Endstoppung wurden die Umsetzungsprodukte der Beispiele folgendermaßen untersucht:
1. Viskositätsmessungen mit einem Haake Rotationsviskosimeter und
2. Vernetzungstest.

Für den unter 2. beschriebenen Vernetzungstest wurden 2,0 Gew.-Teile der zu prüfenden Mischung mit 0,1 Gew.-Teil Tetraisopropyltitanat vermischt. Beobachtet man nach Zugabe des Titanates einen raschen Viskositätsanstieg unter starker Vergelung des Gemisches, so ist dies ein Hinweis auf eine unvollständige Umsetzung der SiOH-Gruppen des verwendeten α,ω-Dihydroxy-poly(diorganosiloxans) zurückzuführen. Wird ein solches Verhalten nicht festgestellt und härtet das Material bei Einwirkung von Luftfeuchtigkeit zu einem Elastomer aus, so kann auf eine erfolgte Endstoppung geschlossen werden.

### Allgemeine Arbeitsweise bei der Herstellung und Beurteilung der RTV-1 Massen

Die Herstellung der RTV-1 Massen erfolgte in einem 11-Plantenmischer entsprechend den im folgenden aufgeführten Beispielen. Nach Abschluß der Herstellung wurden die Massen in Kunststoffkartuschen gefüllt. Aus den verschlossenen Kartuschen wurde Material für die entsprechenden weiteren Prüfungen entnommen.

Das Vernetzungsverhalten der Polysiloxanmassen wurde auf einer Glasplatte geprüft, wozu die Pasten in einer Schichtdicke von 2 mm auf einer Fläche von 40 mal 60 mm aufgetragen wurden. Nach 24 Stunden wurde die Durchhärtung des Material bis zur Glasoberfläche geprüft.

Zur Ermittlung der mechanischen Eigenschaften der Vulkanisate wurden die Pasten in 2 mm dicken Schichten ausgezogen und nach 14-tägiger Aushärtung bei 23°C und 50 % relativer Luftfeuchtigkeit nach DIN 53 504 geprüft.

### Vergleichsbeispiel 1

In einem Planetenmischer wurden 100,0 Gew.-Teile eines Polydimethylsiloxans mit Si(CH₃)₂OH-Endgruppen, das eine Viskosität von 50 Pas bei 25°C besaß, mit 1,0 Gew.-Teilen Methyltrimethoxysilan vermischt und 0,72 Gew.-Teilen Di-2-ethylhexylphosphat zugegeben. Die Viskosität der Mischung betrug nach Herstellung 49,3 Pas. Nach 11 Minuten Wartezeit wurde der Vernetzungstest durchgeführt. Es konnte keine Vergelung beobachtet werden. Es wurden 0,23 Gew.-Teile Triethylamin zugegeben und nach 2,5 Stunden wiederum die Viskosität ermittelt, die 49,3 Pas betrug. Aus den Ergebnissen kann auf eine erfolgte Endstoppung geschlossen werden.

### Vergleichsbeispiel 2

Es wurde analog Vergleichsbeispiel 1 verfahren jedoch auf den Zusatz des Katalysators verzichtet. Im Vernetzungstest vergelte die Mischung sehr stark, was auf eine nicht erfolgte Endstoppung schließen läst. Der Versuch zeigt, daß ohne die Verwendung der erfindungsgemäßen Katalysatoren das Alkoxysilan nicht mit dem α,ω-Dihydroxy-poly(diorganosiloxan) reagiert.

### Beispiel 1

Zunächst wurden in einem Rundkolben 0,6 Gew.-Teile P₂O₅ in 4,0 Gew.-Teilen Toluol mit 1,8 Gew.-Teilen Vinyltrimethoxysilan unter Stickstoffatmosphäre umgesetzt. In einem Plantenmischer wurden zu einer Mischung aus 100,0 Gew.-Teile eines Polydimethylsiloxans mit Si(CH₃)₂OH-Endgruppen, das eine Viskosität von 50 Pas bei 25°C besaß und 0,2 Gew.-Teile Methanol 6,4 Gew.-Teile des obigen Umsetzungsprodukts zugesetzt. Die Viskosität betrug 5 Minuten nach der Herstellung 64 Pas. Nach 10 Minuten wurde ein Vernetzungstest durchgeführt. Es konnte keine Vergelung beobachtet werden. Es wurde mit 0,8 Gew.-Teile Triethylamin zugegeben und nach 2 Stunden wiederum die Viskosität ermittelt, die 67 Pas betrug. Diese Ergebnisse belegen eine Endstoppung.

### Beispiel 2

In einem Rundkolben 0,6 Gew.-Teile P₂O₅ in 4,0 Teilen mit 1,8 Gew.-Teilen Vinyltrimethoxysilan unter Stickstoffatmosphäre umgesetzt. In einem Plantenmischer wurden das Umsetzungsprodukt (6,4 Gew.-Teile), 100,0 Gew.-Teile eines Polydimethylsiloxans aus Beispiel 1 und weiteren 0,6 Gew.-Teile Vinyltrimethoxysilan vermischt. Die Viskosität betrug 5 Minuten nach der Herstellung 69 Pas. Nach 10 Minuten wurde ein Vernetzungstest durchgeführt. Es konnte keine Vergelung beobachtet werden. Es wurde mit 0,8 Gew.-Teile Triethylamin zugegeben und nach 2 Stunden wiederum die Viskosität ermittelt, die 68 Pas betrug. Diese Ergebnisse belegen eine Endstoppung.

### Beispiel 3

In einem Rundkolben wurden 0,6 Gew.-Teile P₂O₅ in 4,0 Gew.-Teilen Toluol mit 3,0 Gew.-Teilen Methyltrimethoxysilan unter Stickstoffatmosphäre umgesetzt. In einem Plantenmischer wurden das Umsetzungsprodukt (7,6 Gew.-Teile), 100,0 Gew.-Teile eines Polydimethylsiloxans aus Beispiel 1. Die Viskosität betrug 5 Minuten nach der Herstellung 80 Pas. Nach 10 Minuten wurde ein Vernetzungstest durchgeführt. Es konnte keine Vergelung beobachtet werden. Es wurde mit 0,8 Gew.-Teile Triethylamin zugegeben und nach 2 Stunden wiederum die Viskosität ermittelt, die 80 Pas betrug. Diese Ergebnisse belegen eine Endstoppung.

### Beispiel 4

In einem Rundkolben wurden 0,6 Gew.-Teile P₂O₅ in 4,0 Gew.-Teilen Toluol mit 3,0 Gew.-Teilen Vinyltrimethoxysilan unter Stickstoffatmosphäre umgesetzt. In einem Plantenmischer wurden das Umsetzungsprodukt (7,6 Gew.-Teile), 100,0 Gew.-Teile eines Polydimethylsiloxans aus Beispiel 1. Die Viskosität betrug 5 Minuten nach der Herstellung 80 Pas. Nach 16 Minuten wurde ein Vernetzungstest durchgeführt. Es konnte keine Vergelung beobachtet werden. Es wurde mit 0,8 Gew.-Teile Triethylamin zugegeben und nach 2 Stunden wiederum die Viskosität ermittelt, die 80 Pas betrug. Diese Ergebnisse belegen eine Endstoppung.

### Beispiel 5

Komponente A: ein Umsetzungsprodukt von 6,11 Gew.-Teilen P₂O₅ und 93,89 Gew.-Teilen Vinyltrimethoxysilan. In einem 11-Planetenmischer wurden 55 Gew.-Teile eines Polysiloxans aus Beispiel 1 und 29 Gew.-Teile eines Polysiloxans, welches Trimethylsilyl-Endgruppen besaß und eine Viskosität bei 25°C von 100 mPas aufwies, mit 3,52 Gew-.Teilen der Komponente A vermischt. Nach 5 Minuten werden 11,5 Teile einer pyrogenen Kieselsäure, die eine Oberfläche von 120 m² g⁻¹ besaß, eingearbeitet. Anschließend wurden 1,42 Gew.-Teile g-Aminopropyltriethoxysilan und 0,6 Gew.-Teile eines Zinnkatalysators zugegeben, dessen Zinnanteil bei 15 Gew.-% lag.

Die Pasten wurden unter Luftausschluß in PE-Kartuschen abgefüllt und waren unter Ausschluß von Luftfeuchtigkeit lagerstabil. Eine 2 mm dicke Schicht härtete, der Luftfeuchtigkeit ausgesetzt, in weniger als 24 h zu einem Elastomer aus. (DIN 53504: Reißfestigkeit: 2,0 MPa, Bruchdehnung 680 %; Zugspannung bei 100 % Dehnung: 0,4 MPa)

### Beispiel 6

Komponente B: ein Umsetzungsprodukt von 6,11 Gew.-Teilen P₂O₅ und 120 Gew.-Teilen Vinyltriethoxysilan. In einem 11-Planetenmischer wurden 55 Gew.-Teile eines Polysiloxans aus Beispiel 1 und 29 Gew.-Teile eines Polysiloxans, welches Trimethylsilyl-Endgruppen besaß und eine Viskosität bei 25°C von 100 mPas aufwies, mit 3,5 Gew.-Teilen der Komponente B vermischt Nach 5 Minuten wurden 10,5 Teile einer pyrogenen Kieselsäure, die eine Oberfläche von 120 m² g⁻¹ besaß, eingearbeitet. Anschließend wurden 0,8 Gew.-Teile g-Aminopropyltriethoxysilan und 0,6 Gew.-Teile eines Zinnkatalysators zugegeben, dessen Zinnanteil bei 15 Gew.-% lag.

Die Pasten wurden unter Luftausschluß in PE-Kartuschen abgefüllt und waren unter Ausschluß von Luftfeuchtigkeit lagerstabil. Eine 2 mm dicke Schicht härtete an der Luftfeuchtigkeit in weniger als 24 h zu einem Elastomer aus. (DIN 53504: Reißfestigkeit: 1,5 MPa, Bruchdehnung 770 %; Zugspannung bei 100 % Dehnung: 0,3 MPa)

## Patentansprüche

1. Verfahren zur Herstellung von Poly(diorganosiloxanen) mit Diorganyloxy-organylsilyl- oder Triorganyloxysilyl-Endgruppen **dadurch gekennzeichnet, dass** α,ω-Dihydroxy-poly(diorganosiloxanen) mit dem Umsetzungsprodukt aus Phosphor(V)oxid mit mindestens einem Alkoxysilan umgesetzt werden.

2. Verfahren nach Anspruch 1, **dadurch gekennzeichnet, daß** die eingesetzten α,ω-Dihydroxy-poly(diorganosiloxane) eine Viskosität zwischen 0,1 und 1000 Pas besitzen.

3. Verfahren nach einem der Ansprüchen 1 bis 2, **dadurch gekennzeichnet, daß** als Alkoxysilan Methyltrimethoxysilan, Methyltriethoxysilan, Vinyltriethoxysilan, Vinyltriisopropoxysilan, Tetramethoxysilan, Tetraethoxysilan und/oder Vinyltrimethoxysilan eingesetzt werden.

4. Verfahren nach einem oder mehreren der Ansprüche 1 bis 3, **dadurch gekennzeichnet, daß** das Umsetzungsprodukt durch die Reaktion mindestens eines Alkoxysilans mit dem Phosphor(V)oxid bei Temperaturen zwischen 20 und 150°C hergestellt wird.

5. Verfahren nach einem oder mehreren der Ansprüche 1 bis 4, **dadurch gekennzeichnet, dass** das Umsetzungsprodukt in einer Menge von 0,1-8 %, bezogen auf die Gesamtmischung, eingesetzt wird.

6. Verfahren nach einem oder mehreren der Ansprüche 1 bis 5, **dadurch gekennzeichnet, dass** das Umsetzungsprodukt durch Zugabe von Basen desaktiviert wird.

7. Verfahren nach einem oder mehreren der Ansprüche 1 bis 6, **dadurch gekennzeichnet, daß** zusätzlich mindestens ein Alkohol zugesetzt wird.

## Claims

1. Process for preparing poly(diorganosiloxanes) having diorganooxyorganosilyl or triorganooxysilyl end groups, **characterized in that** α,ω-dihydroxy-poly(diorganosiloxanes) are reacted with the reaction product of phosphorus(V) oxide with at least one alkoxysilane.

2. Process according to Claim 1, **characterized in that** the α,ω-dihydroxypoly(diorganosiloxanes) used have a viscosity of from 0.1 to 1 000 Pas.

3. Process according to Claim 1 or 2, **characterized in that** methyltrimethoxysilane, methyltriethoxysilane, vinyltriethoxysilane, vinyltriisopropoxysilane, tetramethoxysilane, tetraethoxysilane and/or vinyltrimethoxysilane is/are used as alkoxysilane.

4. Process according to one or more of Claims 1 to 3, **characterized in that** the reaction product is prepared by reaction of at least one alkoxysilane with phosphorus(V) oxide at temperatures of from 20 to 150°C.

5. Process according to one or more of Claims 1 to 4, **characterized in that** the reaction product is used in an amount of 0.1-8%, based on the total mixture.

6. Process according to one or more of Claims 1 to 5, **characterized in that** the reaction product is deactivated by addition of bases.

7. Process according to one or more of Claims 1 to 6, **characterized in that** at least one alcohol is additionally added.

## Revendications

1. Procédé pour la préparation de poly(diorganosiloxanes) avec des groupes terminaux diorganyloxyorganylsilyle ou triorganyloxysilyle **caractérisé en ce que** l'on fait réagir des α,ω-dihydroxy-poly(diorganosiloxanes)avec le produit de réaction d'oxyde de phospore (V) avec au moins un alcoxysilane.

2. Procédé selon la revendication 1, **caractérisé en ce que** les α,ω-dihydroxy-poly(diorganosiloxanes) présentent une viscosité comprise entre 0,1 et 1000 Pas.

3. Procédé selon l'une des revendications 1 à 2, **caractérisé en ce que** l'on utilise comme alcoxysilane le méthyltriméthoxysilane, le méthyltriéthoxysilane, le vinyltriéthoxysilane, le vinyltriisopropoxysilane, le tétraméthoxysilane, le tétraéthoxysilane et/ou le vinyltriméthoxysilane.

4. Procédé selon l'une ou plusieurs des revendications 1 à 3, **caractérisé en ce que** l'on prépare le produit de réaction par la réaction d'au moins un alcoxysilane avec l'oxyde de phosphore (V) à des températures comprises entre 20 et 150°C.

5. Procédé selon l'une ou plusieurs des revendications 1 à 4, **caractérisé en ce que** l'on utilise le produit de réaction dans une quantité de 0,1-8 %, rapportée au mélange total.

6. Procédé selon l'une ou plusieurs des revendications 1 à 5, **caractérisé en ce que** l'on désactive le produit de réaction par addition de bases.

7. Procédé selon l'une ou plusieurs des revendications 1 à 6, **caractérisé en ce que** l'on ajoute en plus au moins un alcool.
